## Europäisches Patentamt
## European Patent Office
## Office européen des brevets

(19)

(11) Publication number: **0 053 474**
**B1**

(12) **EUROPEAN PATENT SPECIFICATION**

(45) Date of publication of patent specification: **26.03.86**

(51) Int. Cl.⁴: **G 11 B 5/09** // G06F11/10

(21) Application number: **81305573.8**

(22) Date of filing: **25.11.81**

(54) **Pulse code modulated signal processing apparatus.**

(30) Priority: **28.11.80 JP 168751/80**

(43) Date of publication of application:
**09.06.82 Bulletin 82/23**

(45) Publication of the grant of the patent:
**26.03.86 Bulletin 86/13**

(84) Designated Contracting States:
**DE FR GB IT NL**

(56) References cited:
**EP-A-0 029 226**
**DE-A-2 721 638**
**FR-A-2 400 801**
**FR-A-2 440 125**
**GB-A-2 071 370**
**GB-A-2 071 371**

**PATENTS ABSTRACTS OF JAPAN, vol. 4, no.
35, 25th March 1980, page 90P3**

**PATENTS ABSTRACTS OF JAPAN, vol. 4, no.
35, 25th March 1980, page 90P3**

(73) Proprietor: **SONY CORPORATION**
**7-35 Kitashinagawa 6-Chome Shinagawa-ku
Tokyo 141 (JP)**

(73) Proprietor: **Kabushiki Kaisha Toshiba
72, Horikawa-cho Saiwai-ku
Kawasaki-shi Kanagawa-ken 210 (JP)**

(72) Inventor: **Hoshimi, Susumu
23 Nakao-cho Asahi-ku
Yokohama-shi Kanagawa-ken (JP)**
Inventor: **Kojima, Tadashi
20-49 Kugo-cho 6-chome
Yokosuka-shi Kanagawa-ken (JP)**

(74) Representative: **Thomas, Christopher Hugo
et al
D Young & Co 10 Staple Inn
London WC1V 7RD (GB)**

Courier Press, Leamington Spa, England.

Description

This invention relates to pulse code modulated (PCM) signal processing apparatus.

There has been proposed a PCM signal recording and reproducing apparatus for modulating an analog audio signal such as music to form a PCM signal. An error correction code and an error detection code are added and the signal is converted to a signal format similar to a television signal, for recording and reproduction by a video tape recorded (VTR). In the VTR, when drop-out is caused, for example, by dust on the magnetic tape forming the recording medium, there is a possibility that a burst error will occur in the reproduced PCM signal. If such a burst error occurs, it becomes quite difficult to error-correct the lost data.

To deal with this problem the following operation is performed. In a PCM processor wherein an audio PCM signal is converted to a quasi-video signal, upon converting the audio PCM signal to the quazi-video signal, that is, during recording, the sample words forming the PCM data are separated into blocks each comprising a predetermined number of words, and an error correction code is generated for each block of PCM data. The PCM data and the error correction code are respectively interleaved so as to have different delay times from each other and the error detection code is further added to the interleaved data. The signals are then converted to a quasi-video signal. When the VTR reproduces the signal thus recorded, the quasi-video signal is converted to the audio PCM signal in an operation which is the opposite of that described above, and de-interleaving is performed so as to disperse the burst error and to correct the data. With such an arrangement, during normal reproduction, all the correction capabilities are utilized so that nearly all of the original PCM data can be reproduced.

However, since the error detection function cannot detect or identify errors with absolute reliability, the data may be supplied to an error correction circuit when it is not actually erroneous. Moreover, when the VTR has a drop-out compensation circuit it may replace dropped data with a previous block of data when a drop-out occurs. Thus, when data is converted to an original format by de-interleaving during reproduction, the final data may become different from the original data. When different data which have already been interleaved are connected to each other in editing, different data may be mixed with the data in changing them to the correct format by de-interleaving. In these cases, since the error correcting circuit performs the error correction, the error correcting circuit produces data quite different from the original data, and when the data are supplied and converted to an audio signal by a digital-to-analog (D/A) converter, the audio signal reproduced may have an abnormal sound.

In order to prevent erroneous correction, a method has been proposed where the error decision is made by employing error detection results both from using an error detection code and syndromes formed from the error correction code and the reproduced PCM data. That is, when an error syndrome indicates the presence of an error, although the absence of an error is indicated by error detecting means, and when the syndrome indicates the existence of another erroneous word in addition to the erroneous word identified by the error indicator which is the result of the error detection, and the position thereof is unknown, the error correction is inhibited and instead, all the PCM words within the block are compensated (that is concealed). For compensation, a front-end hold is used to replace the erroneous word with the correct word occurring prior thereto or a mean value interpolation is used to replace the erroneous word with the mean value of the correct words before and after it. However, if successive errors occur the compensating operation becomes impossible and muting must be used.

The method thus described can prevent erroneous correction. However, the use of muting causes the sound to be lost for some periods. Thus, when two system inputs are provided for reproduced data and which are switched, or when a magnetic tape where data of two forms are connected and recorded for reproduction by a PCM signal editing apparatus, although the number of data errors detected by the error detecting signal is small there remains the problem that erroneous data are detected where a mixture of different data go into one block after de-interleaving, and this results in muting which causes sound to be lost in the proximity of a connecting point of the data.

French patent specification no. A 2 440 125 discloses an apparatus for correcting errors in PCM data which have been encoded as interleaved binary data words for two channels and which include error-correction words and error-detection words. The apparatus comprises an error detector for receiving the PCM data and indicating whether an error exists in a data format, de-interleaving means for de-interleaving the PCM data to produce the binary data words and the error correction words and to identify any binary word in error, a syndrome signal generating circuit for receiving the output of the de-interleaving means to produce error syndrome signals, an error correcting circuit for receiving the outputs of the syndrome signal generating means and the de-interleaving means and correcting binary data words in error, and an error compensation circuit for compensating errors which are not correctable by the error correcting circuit.

According to the present invention there is provided a PCM signal processing apparatus arranged to receive successive transmission blocks each comprising time-interleaved PCM data, error correction and error detection words, said apparatus comprising:
error detecting means responssive to said error detecting words for detecting if a received transmission block contains an error;

error identifying means for identifying as being erroneous each of the time-interleaved words included in the received transmission block which has been detected as containing an error;

de-interleaving means for time-deinterleaving each received transmission block to recover a de-interleaved block comprising de-interleaved PCM and error-correction words with the erroneous ones of said de-interleaved words being respectively identified;

syndrome generating means coupled to said de-interleaving means for generating error syndrome signals using said de-interleaved PCM and error-correction words in said de-interleaved block;

error correcting means responsive to said error syndrome signals and/or to the identification of said error identifying means for correcting an erroneous PCM word in said de-interleaved block as a function of the remaining non-erroneous PCM and error-correction words in said de-interleaved block; and

error compensating means responsive to the identification of said error identifying means for compensating at least said erroneous PCM word when said error syndrome signal indicates the presence of an erroneous PCM word and said error-correcting means cannot correct it or the location of the error is unknown;
characterised by:

de-interleaving mistake detector means for inhibiting said error compensating means when the state where the locations of the erroneous words have not been detected by the error pointer signal of the error detecting means occurs successively in a predetermined number of blocks;

slew rate control means or filter means coupled to said error correcting or error compensating means and passing said de-interleaved PCM word with a predetermined slew rate; and

selecting means responsive to the inhibition by said de-interleaving mistake detector and for selecting said slew rate control means or filter means.

The invention will now be described by way of example with reference to the accompanying drawings, throughout which like references designate like elements, and in which:

Figures 1A to 1D are diagrams showing the format of one block of data and waveforms of the recording signal in one embodiment of the invention;

Figure 2 is a block diagram of a recording encoder;

Figure 3 is a block diagram of a reproducing decoder;

Figure 4 is a waveform diagram of one example of reproduced data used in explaining an embodiment of the invention; and

Figures 5A and 5B are schematic diagrams for explaining the operation of an embodiment of the invention.

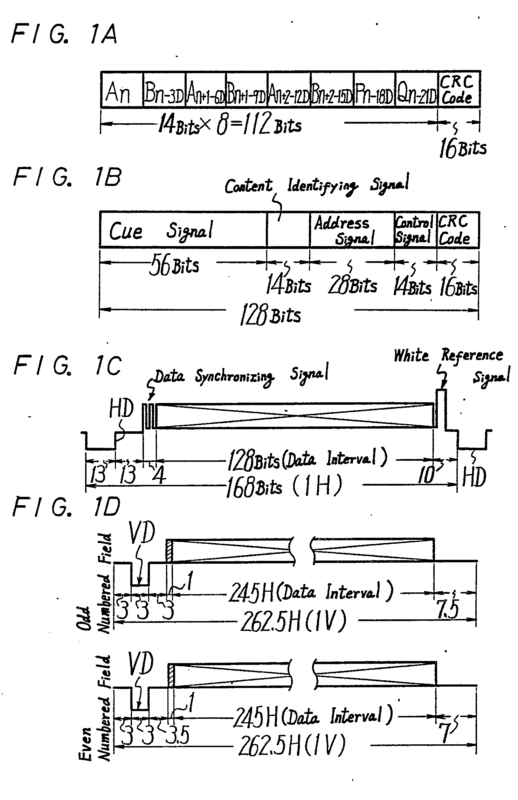

An embodiment of the invention will be described which illustrates a case where the invention is applied to an apparatus comprising PCM audio signal recording and reproducing apparatus in which a conventional home rotary two-head type VTR is used, and is not modified for audio signal recording but merely has an adaptor connected to it. The PCM signal adaptor is arranged to convert audio PCM data to a signal format similar to a television signal and a standard format such as shown in Figures 1A to 1D.

Figure 1A illustrates a data block which is to be inserted into one horizontal interval (1 H) and Figure 1B illustrates a control block to be inserted into another 1 H. Audio signals of two channels are respectively sampled at a sampling frequency fs of 44.056 kHz and are converted to data words Ai and Bi each comprising fourteen bits. One block comprises a PCM word of six words, two parity words Pi and Qi for error correction, and cylic redundancy check (CRC) code of sixteen bits to detect the absence or presence of the aforesaid data having a total of eight words. Accordingly, the length of one block becomes 128 bits. The parity words Pi and Qi for error correction are formed with respect to the six PCM words and are interleaved word by word. In Figure 1A, suffixes attached to each word show the interleaving relationship where a unit delay is represented by D (one block). The control block seen in Figure 1B comprises a cue signal of fifty-six bits, a content identifying signal of fourteen bits, an address signal of twenty-eight bits, a control signal of fourteen bits and a CRC code of sixteen bits so as to detect errors.

As illustrated in Figure 1C, into 1 H (168 bits) of the horizontal synchronizing signal HD is inserted one block of 128 bits. A data synchronizing signal is added to the beginning thereof and a white reference signal is added to the end thereof. Also, as illustrated in Figure 1D, the data interval is 245 H in one field (1 V) excluding an equalizing pulse interval and a vertical synchronizing signal (VD) interval having a total of 9 H (9.5 H for an even-numbered field) and an interval of 7.5 H (7 H) for an even-numbered field) to include the head switching timing. As shown by the crosshatched section in the figure, the control block is inserted into the first 1 H.

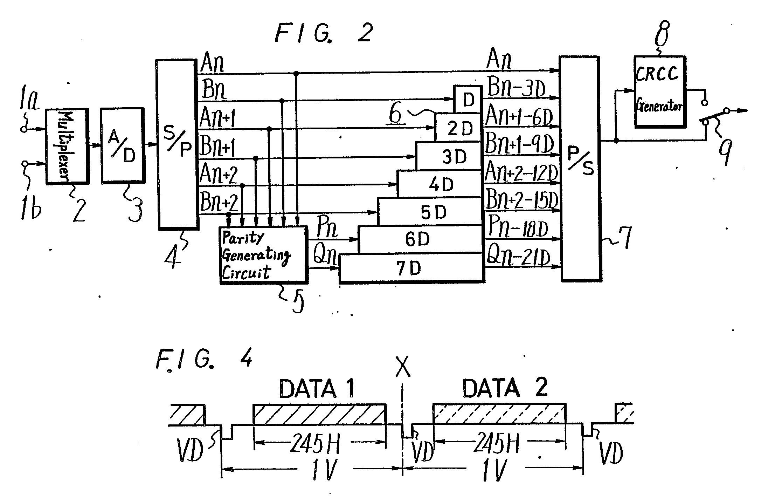

Figure 2 shows an arrangement of a recording encoder wherein there is applied to each input terminal 1a and 1b separate analog output signal of the A and B channels derived from a sample-and-hold circuit (not shown) which is supplied through a multiplexer 2 to an analog-to-digital (A/D) converter 3 where they are digitized with one word for each sample. The output of the A/D converter 3 is supplied to a serial-parallel converter 4 and is converted to a six parallel words. These six words such as An, Bn, An+1, Bn+1, An+2 and Bn+2 are supplied to a parity generating circuit 5 and to an interleaving delay circuit 6. The parity generating circuit 5 operates as follows:

$$P_n = A_n \oplus B_n \oplus A_{n+1} \oplus B_{n+1} \oplus A_{n+2} \oplus B_{n+2}$$

$$Q_n = T^6 A_n \oplus T^5 B_n \oplus T^4 A_{n+1} \oplus T^3 B_{n+1} \oplus T^2 A_{n+2} \oplus T B_{n+2}$$

thereby producing first and second parity words. In the above equation, reference letter $n$ denotes a multiple of either zero or three, $\oplus$ represents a modulo-two addition of each bit corresponding to each word, and T represents a generating matrix. The first and second parity words can correct one word error within one block and if the position of the error word is known, two-word errors can also be corrected. The interleaving delay circuit 6 is provided to delay the six PCM data series from the serial-parallel converter 4 and the two parity data series from the parity generating circuit 5 by different amounts differing by a unit delay time D (0, D, 2 D, 3 D, 4 D, 5 D, 6 D, 7 D). In practice, a random access memory (RAM) is utilized for such delay. Thus, the write and read addresses of the RAM are controlled so as to perform the interleaving and the frequency of the read clock signal is raised so it is higher than the write clock signal, so that the time-base is compressed thereby forming a data blank corresponding to a vertical blanking period. An output of the delay circuit 6 is supplied to a parallel-serial converter 7 and converted to bit serial form, and the CRC code is added to it by a CRC code generator 8 and a switch 9 so as to produce a data output having the form shown in Figure 1A. To this data output are added the synchronizing signal, the equalizing pulse and so forth so as to form a recording signal of the same signal format as the television signal seen in Figures 1C and 1D, which is then applied to a video input terminal of the VTR.

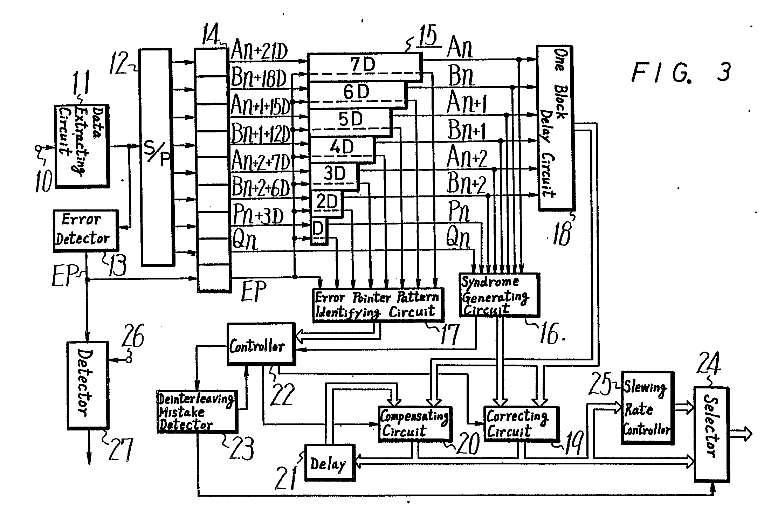

Figure 3 illustrates an arrangement of a reproducing decoder. From an input terminal 10 a reproduced signal produced at the video output terminal of the VTR· is supplied to a waveform shaping and data extracting circuit 11. The synchronizing signal is separated in a manner not shown from the reproduced signal and is employed to form a time pulse signal required for data processing in a reproducing system. The reproduced data is supplied to a serial-parallel converter 12 and to an error detector 13. The error detector 13 is provided to detect errors in the reproduced data in each block by utilizing the CRC code and produces an error pointer signal EP which is "1" if an error exists and is "0" if no error exists. Eight words appearing in the output of the serial-parallel converter 12 and the error pointer signals EP are supplied to a buffer memory 14. The error detector 13 produces the error pointer signal EP with a timing at which all data of one block are input and output to the buffer memory 14. The one block of data and the error pointer signal EP are synchronized with each other. To each of the eight series data appearing at the output of the buffer memory 14 is applied a delay (7 D, 6 D, 5 D, 4 D, 3 D, 2 D, D, 0) which is applied in a de-interleaving delay circuit 15 so·as to cancel the delay previously obtained by the interleaving. In this case, the error pointer signal EP as well as the data are supplied to the de-interleaving delay circuit 15 wherein the error pointer signal EP for one bit is added to each word of the data.

In practice, the de-interleaving delay circuit 15 comprises a memory and is arranged to control addresses thereof so as to apply a predetermined delay as well as to make the frequency of the read clock signal lower than that of the write clock signal thereby performing time-base extension. The data which has been de-interleaved by the de-interleaving delay circuit 15 is supplied to a syndrome generating circuit 16 and the error pointer signal EP accompanying the data is supplied to an error pointer pattern identifying circuit 17. The PCM data derived from the de-interleaving delay circuit 15 is applied, through a one block delay circuit 18, to a correcting circuit 19 and to a compensating circuit 20. To the correcting circuit 19 is also supplied the syndrome signal from the syndrome generating circuit 16, and to the compensating circuit 20 is supplied the previous PCM data which has passed through a delay circuit 21 in order to interpolate the mean value. A controller 22 is provided to control whether error correction is done by the correcting circuit 19 or whether error compensation is done by the compensating circuit 20. The controller 22 receives a discrimination result from the error pointer pattern discriminating circuit 17 and a syndrome discrimination result from the syndrome generating circuit 16.

The manner of correcting or compensating an erroneous word is as follows. For the PCM data of one block to generate the parity words P and Q, six words $W_1$ to $W_6$ may be considered. Six words $W_1$ to $W_6$ and the parity words P and Q are reproduced and supplied to the syndrome generating circuit 16 as follows.

$$S_1 = P \oplus \sum_{n=1}^{6} W_n = P_e \oplus \sum_{n=1}^{6} W_{ne}$$

$$S_2 = Q \oplus \sum_{n=1}^{6} T^{7-n} W_n = Q_e \oplus \sum_{n=1}^{6} T^{7-n} W_{ne}$$

where reference letters Pe and Qe designate error patterns of the parity words P and Q, the error patterns in which, for example, the presence or absence of the error of each bit is respectively represented by "1" or "0", and Wne represents an error pattern of the PCM word. Thus syndrome signals $S_1$ and $S_2$ are formed. If no error exists, $S_1 \neq 0$ and $S_2 = 0$. If only the parity word P is erroneous, $S_1 = 0$ and $S_2 \neq 0$. Moreover, if only the two parity words P and Q are erroneous or if one word or more of the PCM data words $W_1$ to $W_6$ are erroneous, $S_1 \neq 0$ and $S_2 \neq 0$. However, since the error correction is not necessarily required for a case whery only either of the parity word P or Q erroneous, a description will now be given for a case where a PCM word is erroneous.

1. For a one word error of the PCM words:
Can be expressed as:

$\hat{W} = Wi \oplus Wie$

where $\hat{W}i$ represents an erroneous word, $Wi$ represents a true value, $Wie$ represents an error pattern.

(a) If P is correct and the error position $i$ is specified by the error indicator EP, since:

$$S_1 = \sum_{n=1}^{6} Wne = Wie$$

thus $Wi = \hat{W}i \oplus S_1$

(b) If P is erroneous but Q is correct and the error position $i$ is specified by the error indicator EP, since:

$$S_2 = \sum_{n=1}^{6} T^{7-n} Wne = T^{7-i} Wie$$

Thus $Wi = \hat{W}i \oplus Wie = \hat{W}i \oplus T^{i-7} S_2$

(c) If P and Q are correct but the erroneous word of a one word error is unknown, the data words have a one word error and if it is represented by $Wi$:
Thus:
$$S_1 = Wie \qquad S_2 = T^{7-1} Wie$$

then $i$ to satisfy:

$$S_1 = T^{i-7} S_2 \quad \text{or} \quad T^{7-i} S_1 = S_2$$

is searched. If $i$ is known, thus

$\hat{W}i = Wi + S_1.$

2. If P and Q are correct but two words $(Wi, Wj)$ of the PCM word are erroneous (where each error pattern is given as $Wie$ and $Wje$, this can be expressed as follows:

$\hat{W}i = Wi \oplus Wie, \quad \hat{W}j = Wj \oplus Wje$

$$\begin{cases} S_1 = Wie \oplus Wje \\ S_2 = T^{7-i} Wie \oplus T^{7-j} Whe \end{cases}$$

Therefore:

$Wje = (I \oplus T^{i-j})^{-1} (S_1 \oplus T^{i-7} S_2)$

(where letter I denotes a unit matrix).

$Wie = S_1 \oplus Wje$

$Wi = \hat{W}i + Wie$

$\quad = \hat{W}i \oplus S_1 \oplus \oplus (I \oplus T^{i-j})^{-1} (S_1 \oplus T^{i-7} S_2)$

$Wj = \hat{W}j \oplus Wje$

$\quad = \hat{W}j \oplus (I \oplus T^{i-j})^{-1} (S_1 \oplus T^{i-7} S_2)$

The correcting circuit 19 performs the error corrections described above. In cases other than the above, the words regarded as erroneous by the error pointer signal EP are concealed by the compensating circuit 20 under control of the controller 22. However, if the error position cannot be detected even when the presence of the error is known as described below, all the words $W_1$ to $W_6$ are concealed.

3. (a) For a case wherein both P and Q are correct, but the erroneous word is unknown and also the error position $i$ cannot be detected by the method of 1(c), for example, erroneous words of two words or above, although not specified by the error pointer signal EP.

(b) P is correct, but Q is erroneous. Although the error pointer signal EP of each word of $W_1$ to $W_6$ does not specify the erroneous word, $S \neq 0$ is established.

(c) Q is correct, but P is erroneous. Although the error pointer signal EP of each word of $W_1$ to $W_6$ does not specify the erroneous word, $S_2 \neq 0$ is established.

The operation is as follows. If any one of the cases 3(a) to (c) occur successively (what is termed a de-interleaving a mistake), such successive occurrence is detected by a de-interleaving mistake detector 23 associated with the controller 22 so that the error correction and the compensation of all six words are stopped. At the same time, the controller 22 controls the correcting circuit 19 and the compensating circuit 20 so as to pass the erroneous word which was regarded as without error by the error pointer signal EP through the compensating circuit 20 as it is, and further controls a selector 24 to select the PCM data passed through a slewing rate controller 25. The slewing rate controller 25 can determine the slewing rate as a predetermined value and the slewing rate value to be determined is selected to be relatively low. It is also possible for a digital filter to be provided in place of the slewing rate controller 25. The slewing rate controller 25 or the filter may be provided in the stage where the analog signal is produced at an output of a D/A converter.

There is further provided a detector 27 to detect from the error pointer signal EP if a burst error becomes too long to be corrected and compensated, and a terminal 26 receives an overflow detecting signal from the delay circuit 15 (memory) for de-interleaving. The detector 27 produces an output to effect muting.

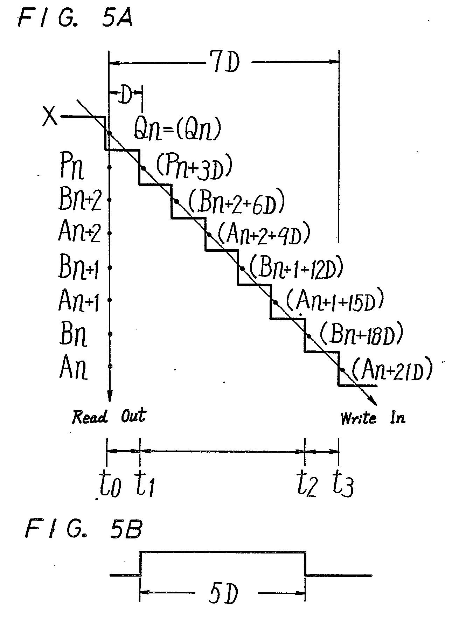

By way of example, as shown in Figure 4, an editing point × is synchronized with the vertical synchronizing signal VD which is taken as a boundary, and a reproduced signal wherein different data DATA1 and DATA2 are interconnected with each other are supplied to a reproducing decoder. In a memory area in which the memory comprises the de-interleaving circuit 15, the reproduced data comprising one block are written in turn word by word into addresses spaced apart from each other by D and are sequentially read out word by word with respect to the addresses for the same block. As illustrated in Figure 5A, when data $A_n$, $B_{n-3D}$, ...$P_{n-18D}$ and $Q_{n-21D}$ of the first block of the DATA 2 after the editing point X is written, data of $A_n$, $B_n$, ...$P_n$ of the DATA 1 are read out together with $Q_{n-21D}$, that is Qn. Accordingly, the de-interleaved output obtained in a period from times $t_0$ to $t_1$, if no error exists, $S_1 = 0$ and $S_2 \neq 0$ and it can be detected that the parity data is erroneous. The data read out and obtained in the period from $t_1$ to $t_2$ after 5 D blocks include different data of two words or more within one block and even if no error exists, $S_1 \neq 0$ and $S_2 \neq 0$ are established which corresponds to a case of 3, as previously described. Thus, the error position $i$ thereof cannot be detected. Moreover, since the data read out obtained during a period $t_2$ to $t_3$ after the D block include different data (DATA 1) of one word within one block and $S_1 \neq 0$ and $S_2 \neq 0$ are established when no error exists. However, since such data is regarded as one word error, a true value can be searched by the error-correction according to the method 1(c) previously discussed.

As described above, the de-interleaving mistake detector 23 detects the de-interleaving mistake during the interval of 5 D blocks from $t_1$ to $t_2$ wherein the erroneous words of each block in the de-interleaved output have not yet been detected by the error pointer signal EP and produces a detecting signal as seen in Figure 5B which goes to a high level in response thereto so as to inhibit the error correction and the compensation of six words, and to control the slewing rate controller 25 to produce the output at the selector 24. The output thus produced is, although not shown, converted to an analog output by the D/A converter and divided into respective channels A and B by a de-multiplexer. The audio signal corresponding to the data processed in the slewing rate controller 25 is mixed with different audio signals and the ratio of the mixture is arranged to be gradually changed.

As will be understood from the above description, since a discontinuity caused by different audio signals is alleviated by the slewing rate controller 25, sound is not lost by using different audio signals as is the case of muting, and since erroneous correction is prevented an abnormal sound will not occur at the output.

**Claims**

1. A PCM signal processing apparatus arranged to receive successive transmission blocks each comprising time-interleaved PCM data, error correction and error detection words, said apparatus comprising:
error detecting means (13) responsive to said error detecting words (CRC) for detecting if a received transmission block contains an error;
error identifying means (17) for identifying as being erroneous each of the time-interleaved words included in the received transmission block which has been detected as containing an error;
de-interleaving means 15 for time-deinterleaving each received transmission block to recover a de-interleaved block comprising de-interleaved PCM and error-correction words with the erroneous ones of said de-interleaved words being respectively identified;
syndrome generating means (16) coupled to said de-interleaving means (15) for generating error syndrome signals using said de-interleaved PCM and error-correction words in said de-interleaved block;
error correcting means (19) responsive to said error syndrome signals and/or to the identification of said error identifying means (17) for correcting an erroneous PCM word in said de-interleaved block as a function of the remaining non-erroneous PCM and error-correction words in said de-interleaved block; and
error compensating means (20) responsive to the identification of said error identifying means (17) for compensating at least said erroneous PCM word when said error syndrome signal indicates the presence of an erroneous PCM word and said error-correcting means (19) cannot correct it or the location of the error is unknown; characterised by:
de-interleaving mistake detector means (23) for inhibiting said error compensating means (20) when the state where the locations of the erroneous words have not been detected by the error pointer signal (EP) of the error detecting means (13) occurs successively in a predetermined number of blocks;
slew rate control means (25) or filter means coupled to said error correcting or error compensating means (19, 20) and passing said de-interleaved PCM word with a predetermined slew rate; and
selecting means (24) responsive to the inhibition by said de-interleaving mistake detector (23) and for selecting said slew rate control means (25) or filter means.

2. Apparatus according to claim 1 comprising a controller (22) for controlling whether error correction is done by said error correcting means (19) or said error compensating means (20), and said de-interleaving mistake detector (23) receives an output from said controller (22) and supplies outputs to said controller (22) and to said switching means (24).

3. Apparatus according to claim 2 comprising a first delay means (21) connected to receive the outputs of said error correcting means (19) and said error compensating means (20) and for supplying an input to said error compensating means (20).

4. Apparatus according to claim 1, claim 2 or claim 3 comprising a further detector (27) connected to said error detecting means (13) and supplying a muting signal under selected error conditions.

5. Apparatus according to claim 2 wherein said de-interleaving means (15) includes a serial-parallel converter (12), and a buffer memory (14) which receives the outputs of said serial-parallel converter (12) and said detecting means (13).

6. Apparatus according to claim 5 wherein said de-interleaving means (15) includes a plurality of delay means of different delays connected to the output of said buffer memory (14).

7. Apparatus according to claim 6 wherein said plurality of delay means comprises a memory (15).

8. Apparatus according to claim 6 including a one block delay means (18) for receiving the outputs of said plurality of delay means and for supplying inputs to said error compensating means (20) and said error correcting means (19).

**Revendications**

1. Appareil de traitement de signaux MIC conçu pour recevoir des blocs de transmission successifs comprenant chacun des données MIC entrelacées dans le temps, des mots de correction d'erreur et de détection d'erreur, ledit appareil comprenant:

un moyen (13) de détection d'erreur qui répond auxdits mots de détection d'erreur (CRC) en déterminant si un bloc de transmission reçu contient une erreur;

un moyen (17) d'identification d'erreur servant à identifier comme étant erroné chacun des mots entrelacés dans le temps qui est incorporé dans le bloc de transmission reçu qui a été détecté comme contenant une erreur;

un moyen de désentrelacement (15) servant à désentrelacer dans le temps chacun des blocs de transmission reçu afin de récupérer un bloc désentrelacé qui comprend des mots MIC désentrelacés et de correction d'erreur, ceux parmi lesdits mots désentrelacés qui sont erronés étant respectivement identifiés;

un moyen (16) générateur de syndrome qui es couplé audit moyen (15) de désentrelacement afin de produire des signaux de syndrome d'erreur utilisant lesdits mots MIC entrelacés et de correction d'erreur dudit bloc désentrelacé;

un moyen (19) de correction d'erreur qui répond auxdits signaux de syndrome d'erreur et, ou bien, à l'identification dudit moyen (17) d'identification d'erreur en corrigeant un mot MIC erroné dudit bloc désentrelacé en fonction de mots MIC non erronés restants et de correction d'erreur dudit bloc désentrelacé; et

un moyen (20) de compensation d'erreur qui répond à l'identification dudit moyen (17) d'identification d'erreur en compensant au moins ledit mot MIC erroné lorsque ledit signal de syndrome d'erreur indique la présence d'un mot MIC erroné et ledit moyen (19) de correction d'erreur ne peut pas corriger celui-ci ou bien lorsque l'emplacement de l'erreur est inconnu;

caractérisé par:

un moyen (23) détecteur d'erreur de désentrelacement servant à invalider ledit moyen (20) de compensation d'erreur lorsque 'état dans lequel les emplacements des mots erronés n'ont pas été détectés par le signal de pointeur d'erreur (EP) du moyen de détection d'erreur se produit successivement dans un certain nombre de blocs prédéterminés; un moyen (25) de commande de vitesse de saut, ou moyen de filtrage, couplé audit moyen de correction d'erreur ou de compensation d'erreur (19, 20) et faisant passer ledit mot MIC désentrelacé avec une vitesse de saut prédéterminée; et

un moyen de sélection (14) qui répond à l'invalidation par ledit détecteur d'erreur de désentrelacement (23) en sélectionnant ledit moyen (25) de commande de vitesse de saut, ou le moyen de filtrage.

2. Appareil selon la revendication 1, comprenant un dispositif de commande (22) servant à commander si la correction d'erreur est effectuée par ledit moyen de correction d'erreur (19) ou ledit moyen de compensation d'erreur (20), et ledit détecteur (23) d'erreur de désentrelacement reçoit un signal de sortie de la part dudit dispositif de commande (22) et délivre des signaux de sortie audit dispositif de commande (22) et audit moyen de commutation (24).

3. Appareil selon la revendication 2, comprenant un premier moyen retardateur (21) connecté de façon à recevoir les signaux de sortie dudit moyen (19) de correction d'erreur et dudit moyen (20) de compensation d'erreur et afin de délivrer un signal d'entrée audit moyen (20) de compensation d'erreur.

4. Appareil selon la revendication 1, 2 ou 3, comprenant un détecteur supplémentaire (27) qui est connecté audit moyen (13) de détection d'erreur et qui délivre un signal de sourdine dans des conditions d'erreur choisies.

5. Appareil selon la revendication 2, où ledit moyen de désentrelacement (15) comporte un convertisseur série-parallèle (12), et une mémoire tampon (14) qui reçoit les signaux de sortie dudit convertisseur série-parallèle (12) et dudit moyen de détection (13).

6. Appareil selon la revendication 5, où ledit moyen de désentrelacement (15) comporte plusieurs moyens retardateurs à retards différents qui sont connectés à la sortie de ladite mémoire tampon (14).

7. Appareil selon la revendication 6, où lesdits moyens retardateurs comprennent une mémoire (15).

8. Appareil selon la revendication 6, comportant un moyen de retard d'un block (18) qui reçoit les signaux de sortie desdits moyens retardateurs et qui délivre des signaux d'entrée audit moyen (20) de compensation d'erreur et audit moyen (19) de correction d'erreur.

**Patentansprüche**

1. PCM-Prozessor zum Empfang aufeinanderfolgender Übertragungsblöcke, die jeweils in zeitlicher Verschachtelung PCM-Daten, Fehlerkorrektur- und Fehlerdetektorwörter (CRC) enthalten,

mit einer auf die genannten Fehlerdetektorwörter ansprechenden Fehlerdetektoreinrichtung (13), mittels derer feststellbar ist, ob ein empfangener Übertragungsblock einen Fehler enthält,

mit einer Fehleridentifizierungseinrichtung (17) zur Identifizierung der in einem als fehlerbehaftet festgestellten Übertragungsblock vorhandenen zeitlich verschachtelten Wörter als fehlerschaft,

mit einer Entschachtelungseinrichtung (De - Interleaver) (15) zur zeitlichen Entschachtelung der empfangenen Übertragungsblöcke in zeitlich entschachtelte Blöcke, die entschachtelte PCM-Wörter und Fehlerkorrekturwörter enthalten, wobei die fehlerhaften Wörter entsprechend identifiziert sind,

mit einem mit der Entschachtelungseinrichtung (15) verbundenen Syndromgenerator (16) zur Erzeugung von Fehlersyndromsignalen unter Verwendung der PCM-Wörter und der Fehlerkorrekturwörter des entschachtelten Blocks,

mit einer auf die genannten Fehlersyndromsignale und/oder auf die Identifizierung der genannten Fehleridentifizierungseinrichtung (17) ansprechenden Fehlerkorrektureinrichtung (19) zur Korrektur eines fehlerhaften PCM-Wortes in dem entschachtelten Block in Abhängigkeit von den verbleibenden fehlerfreien PCM-Wörtern und den Fehlerkorrekturwörtern des entschachtelten Blocks,

sowie mit einer auf die Identifizierung der Fehleridentifizierungseinrichtung (17) ansprechenden Fehlerkompensationseinrichtung (20) zur Kompensation zumindest des genannten fehlerhaften PCM-Wortes, wenn das Fehlersyndromsignal das Vorhandensein eines fehlerhaften PCM-Wortes anzeigt und die Fehlerkorrektureinrichtung (17) dieses nicht korrigieren kann oder die Lage des Fehlers unbekannt ist,

gekennzeichnet durch ,

eine Entschachtelungsfehler - Detektoreinrichtung (23), welche die Fehlerkompensationseinrichtung (20) unwirksam schaltet, wenn in einer vorbestimmten Anzahl von aufeinanderfolgenden Blöcken die Lagen der fehlerhaften Wörter durch das Fehlerhinweissignal (EP) der Fehlerdetektoreinrichtung (13) nicht erfaßt wurden,

eine mit der Fehlerkorrektureinrichtung (19) oder der Fehlerkompensationseinrichtung (20) verbundene Steuerungseinrichtung (25) zur Bestimmung der Anstiegsgeschwindigkeit oder eine Filtereinrichtung, die die das entschachtelte PCM-Wort mit einer vorbestimmten Anstiegsgeschwindigkeit passieren läßt,

sowie eine Auswahleinrichtung (24), die anspricht und die genannte Steuerungseinrichtung (25) auswählt, wenn die Entschachtelungsfehler - Detektoreinrichtung (23) die Fehlerkompensationseinrichtung (20) unwirksam schaltet.

2. Anordnung nach Anspruch 1

mit einer Steuereinrichtung (22) zur Durchführung der Entscheidung, ob die Fehlerkorrektur durch die Fehlerkorrektureinrichtung (19) oder die Fehlerkompensationseinrichtung (20) vorgenommen wird, wobei die Entschachtelungsfehler - Detektoreinrichtung (23) ein Ausgangssignal von der genannten Steuereinrichtung (22) empfängt und ihrerseits Eingangssignal an diese Steuereinrichtung (22) und an die genannte Auswahleinrichtung (24) abgibt.

3. Anordnung nach Anspruch 2, mit einer ersten Verzögerungseinrichtung (21), der die Ausgangssignale der Fehlerkorrektureinrichtung (19) und Fehlerkompensationseinrichtung (20) zugeführt werden und die der Fehlerkompensationseinrichtung (20) ein Eingangssignal zuführen.

4. Anordnung nach Anspruch 1, 2 oder 3, mit einem weiteren Detektor (27), der mit der Fehlerdetektoreinrichtung (13) verbunden ist und unter ausgewählten Fehlerbedingungen ein Stummschaltesignal abgibt.

5. Anordnung nach Anspruch 2, bei welcher die Entschachtelungseinrichtung (15) einen Serien - Parallel - Umsetzer (12) beinhaltet sowie einen Pufferspeicher (14), der die Ausgangssignale des Serien - Parallel - Umsetzers (12) und der Fehlererfassungseinrichtung (13) aufnimmt.

6. Anordnung nach Anspruch 5, bei der die Entschachtelungs einrichtung (15) eine Mehrzahl von Verzögerungseinrichtungen mit jeweils unterschiedlichen Verzögerungszeiten enthält, die mit dem Ausgang des Pufferspeichers (14) verbunden sind.

7. Anordnung nach Anspruch 6, bei der die Verzögerungseinrichtungen von einem Speicher (15) gebildet sind.

8. Anordnung nach Anspruch 6, mit einer Blockverzögerungseinrichtung (18), die die Ausgangssignale der genannten Verzögerungseinrichtungen aufnimmt und der Fehlerkompensationseinrichtung (20) und der Fehlerkorrektureinrichtung (19) Eingangssignale zuführt.

0 053 474

**F I G. 1A**

| An | Bn-3D | An+1-6D | Bn+1-7D | An+2-12D | Bn+2-15D | Pn-18D | Qn-21D | CRC Code |
|----|-------|---------|---------|----------|----------|--------|--------|----------|

|← 14Bits × 8 = 112 Bits →|← 16Bits →|

**F I G. 1B**

Content Identifying Signal

| Cue Signal | | Address Signal | Control Signal | CRC Code |
|------------|---|----------------|----------------|----------|

|← 56Bits →| 14Bits | 28Bits | 14Bits | 16Bits |

|← 128 Bits →|

**F I G. 1C**

Data Synchronizing Signal          White Reference Signal

HD

13  13  4  |← 128Bits (Data Interval) →|  10  HD

|← 168Bits (1H) →|

**F I G. 1D**

Odd Numbered Field

VD

3  3  3  1  |← 245H (Data Interval) →|  7.5

|← 262.5H (1V) →|

Even Numbered Field

VD

3  3  3.5  1  |← 245H (Data Interval) →|  7

|← 262.5H (1V) →|

FIG. 2

FIG. 4

DATA 1    X    DATA 2

VD    245H    VD    245H    VD

1V         1V

0 053 474

0 053 474

FIG. 3

*F I G. 5A*

Read Out         Write In

$t_0$ $t_1$       $t_2$ $t_3$

*F I G. 5B*

4